# EUROPEAN PATENT SPECIFICATION

(11) **EP 0 473 759 B1**
(45) Date of publication and mention of the grant of the patent: **16.08.1995**
(21) Application number: 91906242.2
(22) Date of filing: 07.03.1991
(51) Int. Cl.: B65D 19/32

(54) **A FABRICATED PALLET WITH PLASTICS MATERIAL ELEMENTS**
PALETTE MIT KUNSTSTOFFELEMENTEN
PALETTE REALISEE EN ELEMENTS DE MATIERE PLASTIQUE

(30) Priority: 08.03.1990 IT 2078090 U
(43) Date of publication of application: 11.03.1992
(73) Proprietor: COEFI S.R.L., I-47100 Forli (IT)
(72) Inventor: MENNA, Antonio, I-47100 Forli (IT)
(74) Representative: Checcacci, Giorgio
(86) International application number: EP9100427
(87) International publication number: WO9113810

(56) References cited:
- FR-A- 2 346 135
- GB-A- 1 575 143
- US-A- 3 861 326
- US-A- 4 128 253

## Description

This invention relates to a pallet comprising a bottom rest grid through which the pallet rests when laid down onto the ground and a top supporting grid for supporting goods loaded onto the pallet, and spacer members extending between said grids, the grids including a plurality of crosspieces fastened to one another and to the spacer members.

Prior pallets are made up of unfinished wooden members (crosspieces and spacer members) nail fastened together. The wood may be of varying quality in terms of mechanical strength and resistance to moisture penetration contingent on individual applications.

While such pallets can fill standard demands in a large number of applications, there exist situations where improved features are required or at least desirable, especially as regards sanitation and washability. In fact, the moisture and water absorbency (inherent to any kind of wood, even the hardest ones) makes pallets of unfinished wood unsuitable for direct contact with food products and supporting products during washing operations.

In an attempt at improving the sanitary aspect, pallets formed from plastics materials by injection molding have been proposed. In this way, and through an appropriate design of the mold, structures have been provided which have adequate strength (although formed from mechanically weaker materials) and quite satisfactory from the sanitary standpoint. However, the very high cost of such pallets has militiated against a widespread use thereof.

Document FR-A-2346135, regarded as being the closest prior art, discloses a pallet in which a bottom grid, a top grid and spacer elements are formed from segments of extruded plastic sections; the elements are joined together by hot welding. Such a pallet has a strength which is highly influenced by the welding, particularly in relation to possible impacts against the forks of a lift.

Document US-A-4128253 discloses a pallet in which the spacer elements are joined to upper and lower platforms by means of plastic bolts, which comprise a male and a female portions mechanically interlocked one to the other.

The problem underlining the invention is to provide a pallet having a sufficient strength and being capable of easy full recycling when damaged.

This problem is solved, according to the invention, by a pallet comprising a bottom rest grid through which the pallet rests when laid down onto the ground, a top supporting grid for supporting goods loaded onto the pallet, spacer members extending between said grids, the grids including a plurality of crosspieces fastened to one another and to the spacer members, the crosspieces and spacer members being formed from segments of extruded plastics sections, characterized in that the plurality of crosspieces are fastened to one another and to the spacer members by bolts, and that the crosspieces, the spacer members and the bolts are all made of recycled PVC, each bolt including two rod elements axially coupled one to the other by ultrasonic welding.

This combination ensures a fully satisfactory strength without making use of any material other than recycled PVC, thus allowing easy and full recycling of the pallet at the end of its life. A damaged or anyway no longer utilizable pallet may be directly fed into a crusher for material recovery without the pallet components having to be disassembled first. Moreover, the use of recycled PVC minimize manufacturing costs.

Preferably, the two rod elements of each bolt have reciprocal mating shape, one of the two rod elements being provided with an axial hole, the other rod element being provided with a mating extension.

This construction ensures higher strength to the pallet, particularly in transverse direction, which is the most critical direction due to possible impacts against the forks of a lift, while still keeping the welding area very small.

Preferably, in order to improve the overall strength of the pallet, the section segments with which the crosspieces are fabricated would be laid in the pallet with their extrusion axis horizontal, whereas the section segments with which the spacer members are fabricated would have their extrusion axis arranged to lie vertically.

Of preference, and in the interest of minimizing costs, all the crosspieces would be formed from a common first section, and all the spacer members from a common second section, thereby only two types of sections are required.

Preferably, the first section would be of a flattened box-type design comprising a closed periphery and strengthening cross-laid baffle plates defining a plurality of side-by-side tubular cavities. This simple construction affords lightweight and adequate flexural and compression strength at one time.

To improve frictional contact and prevent objectionable slipping of the goods across the pallet or of the pallet across a lift truck in handling, the first section would have preferably a scored outer surface.

Preferably, the second section is of a tubular construction, with an inner tube, an outer tube, and radial baffle plates therebetween to form partitioned cavities. This simple construction is specially effective to withstand the large compressive loads to which the spacer members are subjected.

Further features and advantages of a pallet according to this invention will become more clearly apparent from the following detailed description of a preferred embodiment thereof, given with reference to the accompanying drawings. In the drawings:

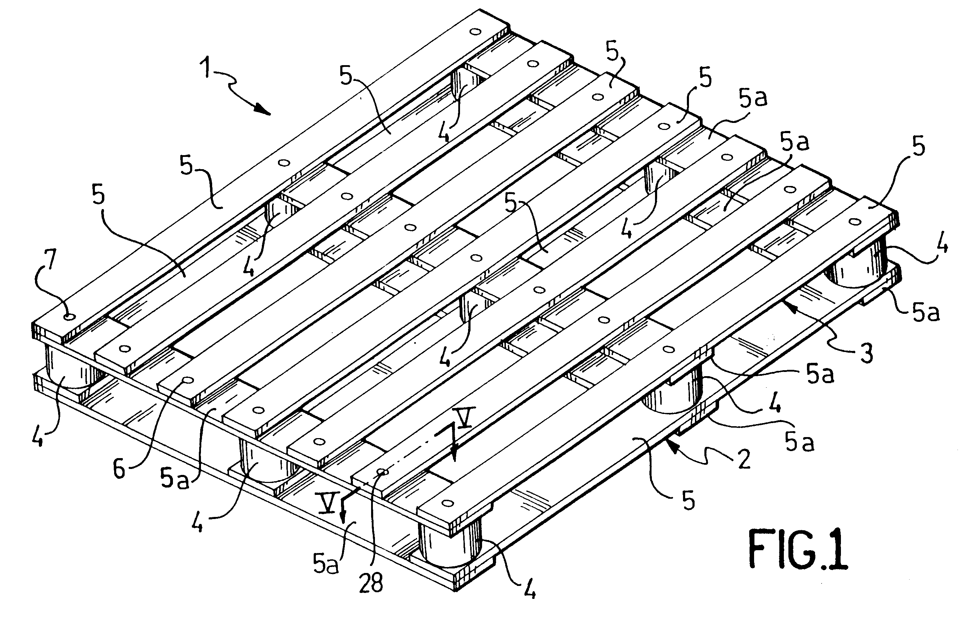

Figure 1 is a general perspective view of a pallet according to the invention;

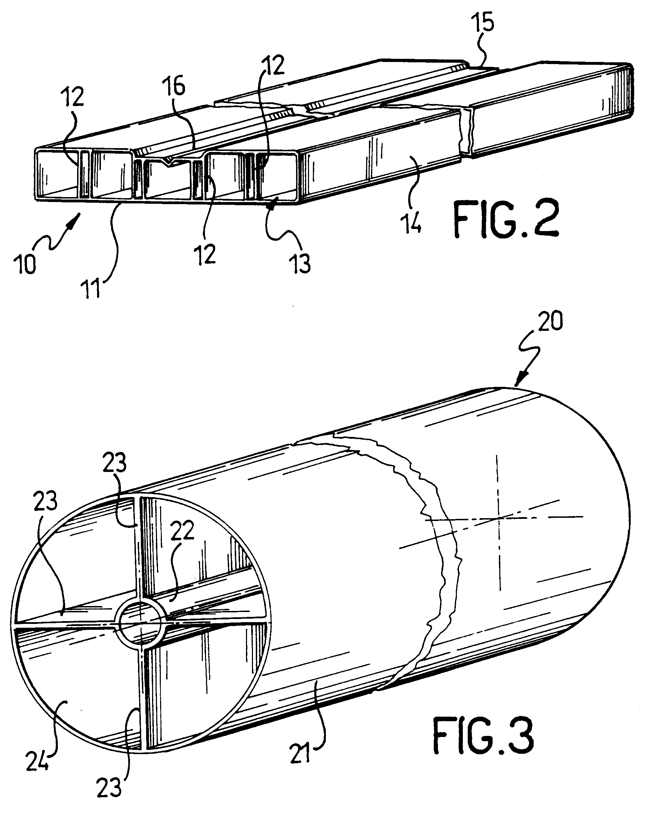

Figure 2 is a perspective detail view of the molding employed for making the crosspieces in the pallet of Figure 1;
Figure 3 is a perspective detail view of the molding employed for making the spacer member of the pallet of Figure 1;
Figures 4a and 4b are a dissassembled views of a preferred embodiment of a plastics bolt fastener; and
Figure 5 is a cross section taken along line V-V in Figure 1.

Shown generally at 1 in the drawing figures is a pallet which comprises a bottom rest grid 2 through which the pallet rests when laid down onto the ground, and a top supporting grid 3 for supporting goods loaded onto the pallet. Arranged between the gridworks 2 and 3 are spacer members 4.

In addition, the grids 2 and 3 are each provided with a plurality of crosspieces 5, 5a which are fastened to one another and to the spacer members 4 by plastics bolts schematically shown at 6 and 7. In the example shown, the rest grid 2 has six crosspieces 5, of which three are laid in one direction and three in the other direction, and the supporting grid 3 has ten cosspieces 5, of which three are laid in one direction and seven in the other direction, to afford a broader bearing surface for the goods.

The crosspieces 5, 5a and spacer members 4 are fabricated from segments of sections 10 and 20, respectively, which are extruded sections of a plastics material, preferably recycled PVC.

The section segments wherewith the crosspieces 5 are fabricated are laid in the pallet 1 with their extrusion axis horizontal, whereas the section segments 20 wherewith the spacer members 4 are fabricated are laid with their extrusion axis vertical.

The section 10 is of a flattened box-type design and comprises a closed periphery 11 and strengthening cross-laid baffle plate 12 which define a plurality of side-by-side tubular cavities 13. The outer surface of the section 10 is scored as at 14. Provided in one of the major faces of the section 10, at a central location thereon, is a recessed region 15 having a mid V-shaped groove 16.

The section 20 is a tubular construction, and comprises an outer tube 21, an inner tube 22, and radial baffle plates 23 therebetween which define quadrant cavities 24. In assembling the pallet 1, the inner tube 22 of the section 20 is used as a guide for the bolts 7.

The pallet 1 assembly process, which may be carried out by the end user himself, begins with the drilling of the crosspieces 5, with the grooves 16 serving as guides for the drill bit; thereafter, the crosspieces 5 and spacer members 4 are readily assembled using the bolts 6 and 7 into a desired layout. It should be noted that this straightforward assembly procedure favors direct assembly by the user himself, specially where non-standard size pallets are to be provided.

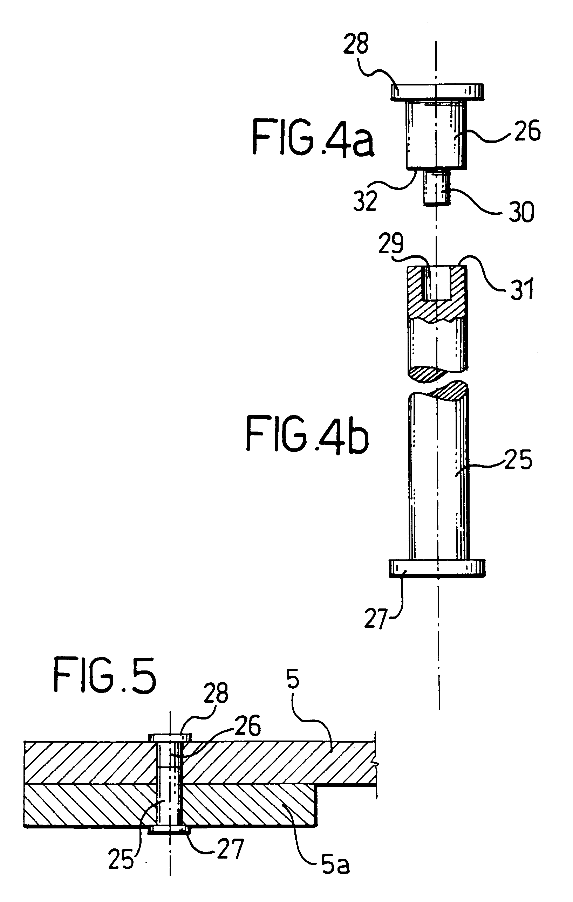

According to the preferred embodiment shown in Figg. 4a and 4b, the bolts 6 and/or 7 comprise a first rod like element 25 and a second rod like element 26 each provided with a respective abutment 27 and 28.

The element 25 is also provided with an axial hole 29 and the rod like element 26 is provided with an extension 30 mating in shape and length with the hole 29.

In the assembling of the crosspieces 5, as it is shown in fig. 5 the rod elements 25 and 26 are connected together by inserting the extension 30 into the hole 29 and pressing in order to have a full face contact between the annular surface 31 of the free end of the element 25 and the counterfaced surface 32 of the element 26.

A ultrasonic technology can be conveniently used for welding together the rod elements 25 and 26.

Also easily performed (and hence economically convenient) is the replacement of individual elements of a damaged pallet, which would be quite uneconomical with a conventional pallet made up of wooden elements nailed together.

Preferably, plugs would be fitted to the ends of the crosspieces 5 to seal off the cavities 13.

## Claims

1. A pallet (1) comprising a bottom rest grid (2) through which the pallet (1) rests when laid down onto the ground, a top supporting grid (3) for supporting goods loaded onto the pallet (1), spacer members (4) extending between said grids (2, 3), the grids (2, 3) including a plurality of crosspieces (5) fastened to one another and to the spacer members (4) the crosspieces (5) and spacer members (4) being formed from segments of extruded plastics sections (10, 20), characterized in that the plurality of crosspieces (5) are fastened to one another and to the spacer members (4) by bolts (6, 7), and that the crosspieces (5), the spacer members (4) and the bolts (6, 7) are all made of recycled PVC, each bolt (6, 7) including two rod elements (25, 26) axially coupled one to the other by ultrasonic welding.

2. A pallet according to claim 1, wherein the two rod elements (25, 26) of each bolt (6, 7) have reciprocal mating shape, one (25) of the two rod elements being provided with an axial hole (29), the other rod element (26) being provided with a mating extension (30).

3. A pallet according to Claim 1, characterised in that the section segments (10) wherewith the crosspieces (5) are fabricated, are laid in the pallet (1) with their extrusion axis horizontal, whereas the section segments (20) wherewith the spacer members (4) are fabricated, are laid therein with their extrusion axis vertical.

4. A pallet according to Claim 3, characterised in that all the crosspieces (5) are formed from a common first section (10) and all the spacer members (4) are formed from a common second section (20).

5. A pallet according to Claim 4, characterised in that the first section (10) is a flattened box-type section comprising a closed periphery and strengthening cross-laid baffle plates (12) defining a plurality of side-by-side tubular cavities (13).

6. A pallet according to Claim 5, characterised in that the first section (10) has a scored outer surface.

7. A pallet according to Claim 6, characterised in that the second section (20) is a tubular section having an inner tube (22), an outer tube (21), and radial baffle plates (23) therebetween defining quadrant cavities (24).

## Patentansprüche

1. Palette, umfassend ein unteres Auflagegitter (2), mit dem die Palette aufliegt, wenn sie auf den Boden gelegt ist, ein oberes Tragegitter (3) zum Tragen von auf die Palette (1) geladenen Gütern und sich zwischen den Gittern (2, 3) erstreckende Abstandsteile (4), wobei die Gitter (2, 3) eine Mehrzahl von Querstücken (5) aufweisen, die miteinander und mit den Abstandsteilen (4) verbunden sind und wobei die Querstücke (5) und die Abstandsteile (4) aus Abschnitten extrudierter Kunststoffprofile (10, 20) gebildet sind,
**dadurch gekennzeichnet,** daß
die Mehrzahl der Querstücke (5) miteinander und mit den Abstandsteilen (4) durch Bolzen (6, 7) verbunden sind und daß alle Querstücke (5), Abstandsteile (4) und Bolzen (6, 7) aus wiederaufbereitetem PVC hergestellt sind, wobei jeder Bolzen (6, 7) zwei Stabelemente (25, 26) umfaßt, die durch Ultraschallschweißen axial miteinander verbunden sind.

2. Palette nach Anspruch 1, bei welcher die zwei Stabelemente (25, 26) jedes Bolzens (6, 7) eine aneinander angepaßte Form haben, wobei eines (25) der beiden Stabelemente ein axiales Loch (29) und das andere Stabelement (26) einen passenden Fortsatz (30) aufweist.

3. Palette nach Anspruch 1, dadurch gekennzeichnet, daß die Profilabschnitte (10), aus denen die Querstücke (5) hergestellt sind, mit ihrer Extrusionsachse horizontal in der Palette (1) angeordnet sind, wohingegen die Profilabschnitte (20), aus denen die Abstandsteile (4) hergestellt sind, mit ihrer Extrusionsachse senkrecht angeordnet sind.

4. Palette nach Anspruch 3, dadurch gekennzeichnet, daß alle Querstücke (5) aus einem gemeinsamen ersten Profil (10) und alle Abstandsteile (4) aus einem gemeinsamen zweiten Profil (20) gebildet sind.

5. Palette nach Anspruch 4, dadurch gekennzeichnet, daß das erste Profil (10) ein abgeflachtes, kastenartiges Profil ist, das eine geschlossene Umfläche und verstärkende, querverlaufende Trennplatten (12) aufweist, die eine Mehrzahl benachbarter, röhrenförmiger Hohlräume (13) begrenzen.

6. Palette nach Anspruch 5, dadurch gekennzeichnet, daß das erste Teil (10) eine profilierte äußere Oberfläche hat.

7. Palette nach Anspruch 5, dadurch gekennzeichnet, daß das zweite Profil (20) ein röhrenförmiges Profil ist, das ein inneres Rohr (22), ein äußeres Rohr (21) und radiale Trennplatten (23), die dazwischenliegende, viertelkreisförmige Hohlräume (24) begrenzen, aufweist.

## Revendications

1. Une palette (1) comprenant une grille inférieure d'appui (2) par laquelle la palette (1) repose lorsqu'elle est placée sur le sol, une grille supérieure de support (3) pour recevoir des marchandises chargées sur la palette (1), des éléments écarteurs (4) s'étendant entre lesdites grilles (2, 3), les grilles (2, 3) comprenant une pluralité de traverses (5) fixées entre elles et aux éléments écarteurs (4), les traverses (5) et les éléments écarteurs (4) étant formés à partir de tronçons de profilés en matière plastique extrudée (10, 20), caractérisée en ce que la pluralité de traverses (5) sont fixées entre elles et aux éléments écarteurs (4) par des rivets (6, 7) et en ce que les traverses (5), les éléments écarteurs (4) et les rivets (6, 7) sont tous fabriqués en PVC recyclé, chaque rivet (6, 7) comprenant deux éléments en forme de tige accouplés axialement l'un avec l'autre par soudure ultrasonique.

2. Une palette selon la revendication 1, dans laquelle les deux éléments en forme de tige (25, 26) de chaque rivet (6, 7) ont des formes permettant leur accouplement mutuel, l'un des deux éléments en forme de tige (25) étant prévu avec un trou axial (29), et l'autre élément en forme de tige (26) étant prévu avec un prolongement correspondant (30).

3. Une palette selon la revendication 1, caractérisée en ce que les tronçons de profilé (10) avec lesquels sont fabriquées les traverses (5) sont disposés dans la palette (1) de telle façon que leur axe d'extrusion soit horizontal, alors que les tronçons de profilé (20) avec lesquels sont fabriqués les éléments écarteurs (4) sont disposés de telle façon que leur axe d'extrusion soit vertical.

4. Une palette selon la revendication 3, caractérisée en ce que toutes les traverses (5) sont fabriquées à partir d'un premier profité commun (10), et tous les éléments écarteurs (4) sont fabriqués à partir d'un second profité commun (20).

5. Une palette selon la revendication 4, caractérisée en ce que le premier profité (10) a une structure de boîtier aplati comprenant une paroi périphérique fermée et des cloisons transversales de renfort (12) définissant une pluralité de cavités tubulaires côte à côte (13).

6. Une palette selon la revendication 5, caractérisée en ce que le premier profilé (10) a une surface externe striée.

7. Une palette selon la revendication 6, caractérisée en ce que le second profité (20) a une structure tubulaire, avec un tube interne (22), un tube externe (21), et des cloisons radiales (23) entre les deux définissant des cavités (24) en forme de quadrant.
